Europäisches Patentamt

European Patent Office

Office européen des brevets

(19)

(11) Veröffentlichungsnummer: **0 117 300**
**A2**

(12) ## EUROPÄISCHE PATENTANMELDUNG

(21) Anmeldenummer: **83112044.9**

(22) Anmeldetag: **01.12.83**

(51) Int. Cl.³: **B 01 J 20/10, C 02 F 1/28**

---

(30) Priorität: **01.03.83 DE 3307063**

(43) Veröffentlichungstag der Anmeldung: **05.09.84**
**Patentblatt 84/36**

(84) Benannte Vertragsstaaten: **AT BE FR LU NL SE**

(71) Anmelder: **Hebel Alzenau GmbH & Co.,**
**Brentanostrasse 2, D-8755 Alzenau (DE)**

(72) Erfinder: **Straub, Roland, Lindenstrasse 47,**
**D-6458 Rodenbach (DE)**

(74) Vertreter: **Liebau, Gerhard, Dipl.-Ing., Birkenstrasse 39,**
**D-8900 Augsburg 22 (DE)**

---

(54) **Adsorptionsmittel zur Behandlung von Fabrikationskreislauf- und Abwässern der papiererzeugenden und verwandter Industrien.**

(57) Das Adsorptionsmittel zur Behandlung von Fabrikationskreislauf- und Abwässern der papiererzeugenden und verwandter Industrien, welches zum Entfernen von gelösten oder kollodial dispergierten organischen Stoffen dem in wäßriger Aufschlämmung befindlichen, zur Produktion herangezogenen Stoffgemisch oder dem bei der Produktion freigesetzten Wasser vor dessen Rückführung in den Produktionskreislauf zugesetzt wird, ist feinstgemahlenes Calciumhydrosilicat (Porenbeton), dessen Abrasionswert durch Verwendung von Quarzmehl bei seiner Herstellung durch entsprechende Behandlungsbedingungen bei der Dampfdruckhärtung des Calciumhydrosilicats oder durch Entfernung gröberer Quarzteile nach dem Mahlen auf oder unter einen vorbestimmten Abrasionswert verringert ist.

Adsorptionsmittel zur Behandlung von Fabrikationskreislauf-
und Abwässern der papiererzeugenden und verwandter Industrien.

Die Erfindung betrifft ein Adsorptionsmittel zur Behandlung von Fabrikationskreislauf- und Abwässern der papiererzeugenden und verwandter Industrien, welches zum Entfernen von gelösten oder kolloidal dispergierten organischen
Stoffen dem in wäßriger Aufschlämmung befindlichen, zur
Produktion herangezogenen Stoffgemisch, oder dem bei der
Produktion freigesetzten Wasser vor dessen Zurückführung
in den Produktionskreislauf zugesetzt wird.

Als Adsorptionsmittel für die Behandlung der Papierfabrik-
Wasserkreisläufe wurden bereits feste pulverförmige Adsorptionsmittel verwendet. Beispielsweise ist für den Zusatz zum zur Produktion herangezogenen Stoffgemisch der
Einsatz alkalisch oder sauer aktivierten Bentonits bekannt
(vgl. europäische Patentanmeldung - Veröffentlichungs-Nr.
0 044 058). Sauer aktivierter Bentonit besitzt zwar eine
sehr gute Adsorptionswirkung, jedoch ist er verhältnismäßig teuer in der Herstellung. Alkalisch aktivierter
Bentonit hat eine wesentlich geringere Adsorptionswirkung
als sauer aktivierter Bentonit.

Der Erfindung liegt die Aufgabe zugrunde, ein Adsorptionsmittel zur Behandlung von Fabrikationskreislauf- und Abwässern der papiererzeugenden und verwandter Industrien
anzugeben, welches verhältnismäßig preiswert in der Herstellung ist, dabei eine hohe Adsorptionswirkung aufweist,
keine unzulässigen Einwirkungen auf die Produktionsanlagen
hat und außerdem auch die Qualität des Produktionserzeugnisses möglichst wenig beeinträchtigt.

Die Erfindung besteht darin, daß das Adsorptionsmittel
feinstgemahlenes Calciumhydrosilicat (Porenbeton) ist, dessen Abrasionswert durch Verwendung von Quarzmehl bei seiner Herstellung, durch entsprechende Behandlungsbedingungen bei der Dampfdruckhärtung des Calciumhydrosilicats, oder durch Entfernung gröberer Quarzteile nach dem Mahlen auf oder unter einen vorbestimmten Abrasionswert verringert ist.

Wesentlich für die Brauchbarkeit eines Adsorptionsmittel in der Papierindustrie ist eine niedrige Abrasionswirkung. Bei der Papierherstellung gelangt nämlich der mit Wasser verdünnte Papierfaserstoff auf ein sehr feines umlaufendes, endloses Sieb. Das Sieb dient der Blattbildung und Entwässerung. Bei einem hohen Abrasionswert des Adsorptionsmittels würde das zusammen mit dem überschüssigen Wasser durch das Sieb hindurchtretende Adsorptionsmittel die Lebensdauer des Siebes wesentlich verkürzen. Aus diesem Grund hat die Papierindustrie für die Abrasion einen Grenzwert von ca. 20 mg gemessen mit AT 1000 (nach Zellcheming-Merkblatt V27.5/75) festgelegt. Würde man normales Calciumhydrosilicat, nämlich Gasbeton oder Schaumbeton, wie es in der Bauindustrie verwendet wird, fein mahlen, so würden durch die verhältnismäßig groben Quarzteile des zur Herstellung von Calciumhydrosilikat verwendeten Quarzsandes die Siebe der Papierindustrie durch Abrasion schnell zerstört werden. Aus diesem Grund ist gemäß der Erfindung vorgesehen, daß der Abrasionswert des feinstgemahlenen Calciumhydrosilicats auf oder unter den vorbestimmten bzw. zulässigen Abrasionswert verringert wird. Diese Verringerung des Abrasionswertes erfolgt am zweckmäßigsten dadurch, daß man zur Herstellung des Calciumhydrosilicats anstelle von Quarzsand Quarzmehl verwendet und zwar vorzugsweise in einem Korngrößenbereich von etwa 0 - 80 µm. Die Verwendung von derartigem Quarzmehl ist die einfachste und billigste Art, den Abrasionswert des feinstgemahlenen Calciumhydrosilicats zu verringern. Trotz Verwendung von Quarzmehl ist die Herstellung des neuen Adsorptionsmittels verhältnismäßig preiswert. Es ist wesentlich billiger als sauer aktivierter Bentonit. Gegenüber alkalisch aktiviertem Bentonit hat das erfindungsgemäße Adsorptinonsmittel vor allem eine höhere Adsorptionswirkung. Die hohe Adsorptionswirkung des vorgeschlagenen feinstgemahlenem Calciumhydrosilicats ist ein besonders überraschendes Ergebnis, denn die spezifische Oberfläche, auf die es bei der Adsorptionswirkung entscheidend ankommt, von sauer aktiviertem Bentonit ist etwa 8 mal größer als die des erfindungsgemäß vorgeschlagenen Calciumhydrosilicats. Weiterhin hat das erfindungsgemäß vorgeschlagene feinst-gemahlene Calciumhydrosilicat den Vorteil, daß es die Papierqualität nicht nennenswert beeinflußt.

Wenn bei der Papierherstellung auf besonders weißes Papier Wert gelegt wird, so ist es zweckmäßig, bei der Herstellung von Calciumhydrosilicat anstelle von normalem Portlandzement Weißzement zu verwenden. Hierdurch erhält das feinstgemahlene Calciumhydrosilicat ebenfalls eine weiße Farbe, die die Papierweiße in keiner Weise beeinträchtigt. Wenn zu der Erzeugung des Quarzmehls besonders heller Sand verwendet wird, kann man gegebenenfalls einen Teil des Weißzementes auch durch normalen Portlandzement ersetzen.

Ein niedriger Abrasionswert kann nicht nur durch den Einsatz einer feinteiligen Kristalline-Siliciumdioxid-Quelle, also üblicherweise Quarzmehl, erhalten werden, sondern auch durch besondere Maßnahmen bei der Dampfdruckhärtung des Calciumhydrosilicats. Durch erhöhten Druck und/oder längere Verweildauer im Autoklaven kann nämlich die Korngröße des verwendeten Quarzsandes verringert werden. Allerdings ist hierzu ein erhöhter Energieaufwand erforderlich.

Ferner ist es möglich, Calciumhydrosilicat, wie es als Gasbeton- oder Schaumbetonbruch bei der Herstellung von Porenbeton als Abfall anfällt, ebenfalls so aufzubereiten, daß es als Adsorptionsmittel mit niedrigem Abrasionswert geeignet ist. Hierzu wird Gasbeton- oder Porenbetonbruch schonend feinst gemahlen und anschließend gröbere Quarzteile durch Windsichten oder Flotation entfernt. Der
Mahlvorgang, z.B. in einer Kugelmühle, wird dabei so eingestellt, daß die härteren Quarzkörner nicht oder nur
wenig aufgemahlen werden, das weichere Calciumhydrosilicat
(Tobermorit) dagegen mechanisch zerkleinert wird. Bei der
anschließenden Windsichtung wird Quarz vom Tobermorit getrennt.

Auch andere chemische oder physikalische Trennverfahren
kommen in Frage. So kann z.B. nach vorangehender mechanischer Zermahlung der Quarz und das Calciumhydrosilicat
durch Flotation getrennt werden. Da jedoch Calciumhydrosilicate produktionsbedingt auf einem Quarzkern aufgewachsen
sind, ist für den Flotationsprozeß eine so weitgehende
Mahlung notwendig, daß das Quarzkorn bloßgelegt wird.

Damit das erfindungsgemäße Adsorptionsmittel in der papiererzeugenden Industrie verwendbar ist, ist es zweckmäßig,
das Calciumhydrosilicat auf einen Korngrößenbereich von
0 - 20 µm feinst zu mahlen.

Die Erfindung soll nun in folgendem anhand eines Ausführungsbeispieles näher erläutert werden. Das erfindungsgemäße Adsorptionsmittel wurde unter der Bezeichnung
"HEBELIT 502W" hergestellt und anschließend auf seine
Adsorptionswirkung untersucht.

Hergestellt wurde das erfindungsgemäße Adsorptionsmittel,
HEBELIT 502 W, aus:

     325   kg Quarzmehl (W10 der Fa. Quarzwerk GmbH,
                            5020 Frechen)
     115   kg Weißzement (der Fa. Dyckerhoff)
      60   kg Weißfeinkalk
       3,1 kg Aluminiumsuspension 1:7 (FK 15 d. Fa. Eckhardt, 881 Fürth)
     300   kg Wasser

Der Ansatz (1m³) wurde bei Nachmischen bei 13 bar 12 Stunden autoklaviert, anschließend gebrochen, getrocknet und auf die nachfolgend angegebene Kornverteilung gemahlen.

Kornverteilung (Sedimentationsanalyse):

| + 20 µm | 4,5 Gew.% |
|---|---|
| 10 - 20 | 19,0 |
| 6 - 10 | 23,5 |
| 4 - 6 | 16,0 |
| 2 - 4 | 19,5 |
| 1 - 2 | 10,0 |
| 0 - 1 | 7,5 |

Im übrigen hatte das erfindungsgemäße Adsorptionsmittel, HEBELIT 502 W folgende physikalische Daten:

Spezifische Oberfläche BET (DIN 66 132) 33 m²/g

Glühverlust (1150°C)          9,61 Gew.%

Feuchtigkeit (105°C, 2h)       3,1 Gew.%

Optische Werte

| Weißgehalt R 457 abs. | 80,6 | % |
|---|---|---|
| Helligkeit y | 84,1 | % |
| Farbort x | 0,3156 | |
| y | 0,3212 | |

Abrasionswert
(nach Zellcheming-Merkblatt V 27.5/75)
gemessen mit AT 1000          13 mg

- 6 -

Das verwendete Quarzmehl W10 wird durch eisenfreie Vermahlung von aufbereitetem Quarzsand mit über 99% Kieselsäure und nachfolgender Sichtung hergestellt. Quarzmehl W 10 liegt im Korngrößenbereich 0 - 80 µm und wird charakterisiert durch den Rückstand auf dem Prüfsieb mit 63 µm lichter Maschenweite. Die Siebanalyse (Alpine-Luftstrahlsieb) ergibt:

| Lichte Maschenweite µm | Rückstand in Gew.-% |
|---|---|
| 160 | 0,1 |
| 125 | 0,5 |
| 100 | 1 |
| 80 | 2 |
| 63 | $6^{\pm}2$ |
| 50 | 12 |
| 40 | 20 |

Adsorptionstest:

Behandlung: 3 g Adsorptionsmittel werden mit 10 ml Wasser benetzt. Nach 2 Stunden werden 300 ml der zu untersuchenden Wasserprobe A,B,C (abgesetzte Probe) zugegeben und 30 Minuten gerührt. Anschließend wird über Glasfaserfilter filtriert.

Untersuchte Adsorptionsmittel:
1. Erfindungsgemäßes Adsorptionsmittel Hebelit 502 W
2. Bentonit AG      (alkalisch aktiviert)
3. Silicat Optimum  (sauer aktiviertes Bentonit)

Untersuchte Wasserproben:
A = Kreislaufwasser (Rückwasser) aus einer Anlage zur Erzeugung von Holzschliff, welcher als Faserstoff bei der Papierherstellung Verwendung findet.
B = Abwasser einer Papierfabrik, die holzhaltig gestrichenes Papier herstellt.

C = Kreislaufwasser aus einer gemischten Altpapieraufbereitung.


Analysen:

TOC:        gesamter organischer Kohlenstoffgehalt im Was-
            ser (bestimmt durch Verbrennung).

$\Delta$TOC:    Kohlenstoffgehalt der anionischen organischen
            Verbindungen (bestimmt durch TOC-Differenzmessung vor und nach Adsorption der anionischen
            Verbindungen).

Untersuchungsergebnisse

| | TOC<br>mg C/1 | Abnahme% | ΔTOC<br>mg C/1 | Abnahme% |
|---|---|---|---|---|
| **Wasserprobe A** | | | | |
| filtriert, unbehandelt | 509 | - | 183 | - |
| | | | | |
| nach Behandlung mit: | | | | |
| -Hebelit 502 W | 453 | 11 | 152 | 17 |
| -Bentonit AG | 456 | 10 | 162 | 11 |
| -Silicat Optimum | 326 | 36 | 138 | 25 |
| | | | | |
| **Wasserprobe B** | | | | |
| filtriert, unbehandelt | 172 | - | n.m. | - |
| | | | | |
| nach Behandlung mit: | | | | |
| -Hebelit 502 W | 133 | 23 | n.m. | - |
| -Bentonit AG | 160 | 7 | n.m. | - |
| -Silicat Optimum | 108 | 37 | n.m. | - |
| | | | | |
| **Wasserprobe C** | | | | |
| filtriert, unbehandelt | 509 | - | 52 | - |
| | | | | |
| Nach Behandlung mit: | | | | |
| -Hebelit 502 W | 414 | 19 | n.m. | ~100 |
| -Bentonit AG | 480 | 6 | 11 | 79 |
| -Silicat Optimum | 394 | 23 | n.m. | ~100 |

n.m. = nicht meßbar

Das Untersuchungsergebnis ist bezüglich des erfindungsgemäßen Adsorptionsmittels überraschend positiv. Die beiden zum Vergleich untersuchten Adsorptionsmittel sind marktübliche Produkte, wobei insbesondere der alkalisch aktivierte Bentonit bereits häufig eingesetzt wurde. Bisher gab es keine Adsorptionsprodukte, mit Ausnahme sauer aktivierter Bentonite, die wirksamer waren, als alkalisch aktivierte Bentonite. Wie obige Untersuchungen zeigen, hat das erfindungsgemäße Adsorptionsmittel gegenüber alkalisch aktiviertem Bentonit eine wesentlich gesteigerte Adsorptionswirkung.

Zur Herstellung des erfindungsgemäßen Adsorptionsmittels wird, wie oben erwähnt, vorzugsweise fein gemahlener Quarzsand verwendet. Anstelle von diesem kristallinen Siliciumdioxid können auch amorphe Siliciumdioxid-Materialien, wie z.B. gefällte oder pyrogene Kieselsäuren, aber auch Kieselgur und andere Siliciumdioxid-Quellen verwendet werden.

Gegenüber alkalisch aktivierten Bentoniten, die bei der Behandlung von Kreislaufwasser lediglich in Suspensionsform dem Wasser zugesetzt werden können und in zusätzlichen Aggregaten durch Sedimentation oder Flotation abgetrennt werden müssen, hat das erfindungsgemäße Adsorptionsmittel den weiteren Vorteil, daß es direkt einer Filtrationsbehandlung unterzogen werden kann. Das bei der Kreislaufwasser- oder Abwasserbehandlung mit organischen Stoffen beladene Adsorptionsmittel kann aus dem Wasser herausgefiltert und z.B. als Füllstoff in der Papierindustrie weiterverwendet werden.

Patentansprüche

1. Adsorptionsmittel zur Behandlung von Fabrikationskreislauf- und Abwässern der papiererzeugenden und verwandter Industrien, welches zum Entfernen von gelösten oder kolloidal dispergierten organischen Stoffen dem in wäßriger Aufschlämmung befindlichen, zur Produktion herangezogenen Stoffgemisch oder dem bei der Produktion freigesetzten Wasser vor dessen Zurückführung in den Produktionskreislauf zugesetzt wird, dadurch gekennzeichnet, daß das Adsorptionsmittel feinstgemahlenes Calciumhydrosilicat (Porenbeton) ist, dessen Abrasionswert durch Verwendung von Quarzmehl bei seiner Herstellung durch entsprechende Behandlungsbedingungen bei der Dampfdruckhärtung des Calciumhydrosilicats oder durch Entfernung gröberer Quarzteile nach dem Mahlen auf oder unter einen vorbestimmten Abrasionswert verringert ist.

2. Adsorptionsmittel nach Anspruch 1, dadurch gekennzeichnet, daß der vorbestimmte Abrasionswert 20 mg gemessen mit AT 1000 (nach Zellcheming-Merkblatt V 27. 5/75) ist.

3. Adsorptionsmittel nach Anspruch 1 und 2, dadurch gekennzeichnet, daß zur Herstellung des Calciumhydrosilicats Quarzmehl im Korngrößenbereich von etwa 0 - 80 μm verwendet wird.

4. Adsorptionsmittel nach Anspruch 1 oder 3, dadurch gekennzeichnet, daß zur Herstellung des Calciumhydrosilicats Weißzement verwendet wird.

5. Adsorptionsmittel nach Anspruch 1, dadurch gekennzeichnet, daß der Abrasionswert durch erhöhten Druck und/oder längere Verweildauer bei der Dampfdruckhärtung des Calciumhydrosilicats verringert wird.

0117300

6. Adsorptionsmittel nach Anspruch 1 oder 4, dadurch gekennzeichnet, daß das Calciumhydrosilicat schonend gemahlen und anschließend gröbere Quarzteile durch Windsichten oder Flotation entfernt werden.

7. Adsorptionsmittel nach einem oder mehreren der Ansprüche 1 - 6, dadurch gekennzeichnet, daß das Calciumhydrosilicat auf einem Korngrößenbereich von 0 - 20 µm feinst gemahlen ist.